# EUROPÄISCHE PATENTSCHRIFT

(11) **EP 1 394 380 B1**
(45) Veröffentlichungstag und Bekanntmachung des Hinweises auf die Patenterteilung: **08.04.2009**
(21) Anmeldenummer: 02019471.8
(22) Anmeldetag: 30.08.2002
(51) Int. Cl.: F02B 37/013, F02B 39/00, F02B 37/18, F02B 37/16

(54) **Aufladesystem für eine Brennkraftmaschine**
Supercharging system for an internal combustion engine
Système de suralimentation pour un moteur à combustion interne

(43) Veröffentlichungstag der Anmeldung: 03.03.2004
(73) Patentinhaber: BorgWarner, Inc., Auburn Hills, MI 48326-2872 (US)
(72) Erfinder: Klingel, Dieter, 67281 Kirchheim (DE)
(74) Vertreter: Patentanwälte Westphal, Mussgnug & Partner

(56) Entgegenhaltungen:
- EP-A- 1 191 202
- DE-A- 19 822 874
- DE-A- 19 837 978
- GB-A- 1 510 070
- GB-A- 2 062 752
- GB-A- 2 069 593
- JP-A- 62 000 625
- US-A- 2 306 277
- US-A- 4 155 684
- US-A- 4 344 289
- US-A- 5 528 902
- US-A- 5 560 207
- US-A- 5 692 378

## Beschreibung

Die Erfindung betrifft ganz allgemein ein Aufladesystem für eine Brennkraftmaschine, das zumindest zweistufig ausgebildet ist, wobei eine jeweilige Stufe des Aufladesystems jeweils eine Turbine und jeweils einen Verdichter, die über eine gemeinsame Welle miteinander gekoppelt sind, aufweist. Die Erfindung betrifft ferner eine Brennkraftmaschine mit einem Aufladesystem.

Ein solches Aufladesystem ist beispielsweise ein Abgasturbolader. Moderne turboaufgeladene Brennkraftmaschinen sind mit einem zweistufigen Turbolader ausgestattet. Ein zweistufiger Turbolader weist eine Niederdruckstufe sowie eine Hochdruckstufe auf, die jeweils einen Verdichter und eine Turbine enthalten. Turbine und Verdichter sind miteinander über eine gemeinsame Welle gekoppelt. Eine gattungsgemäße Brennkraftmaschine mit einem solchen zweistufigen Aufladesystem ist beispielsweise in den deutschen Offenlegungsschriften DE 198 37 978 A1 und DE 195 14 572 A1 ausführlich beschrieben, so dass auf deren Aufbau und Funktionsweise nachfolgend nicht näher eingegangen wird.

Problematisch an einem zwei- oder mehrstufig ausgebildeten Turbolader ist der dafür erforderlichen Platzbedarf im Motorraum. Besonders gravierend ist dieses Problem bei Nutzfahrzeugen, bei denen die einzelnen Turboladerstufen naturgemäß sehr viel größer dimensioniert sind als bei Personenkraftfahrzeugen und somit einen erheblichen Platzbedarf im Motorraum benötigen. Dieser steht jedoch vielfach nicht zur Verfügung, so dass der für einen zweistufig ausgebildeten Turbolader erforderliche Raumbedarf zu oft unlösbaren Problemen führt.

In der deutschen Patentanmeldung DE 198 22 874 A1 ist eine Anordnung beschrieben, bei der zwei Abgasturbolader in einem gemeinsamen Gehäuse integriert sind. Bei der in der DE 198 22 874 A1 beschriebenen Anordnung handelt es sich aber um die Integration zweier abgasseitig parallel zueinander angeordneter Turbolader, die jeweils lediglich eine einzige Turboladerstufe aufweisen. Die beiden parallelen Turbolader weisen einen gemeinsamen Einlass und zwei getrennte Abgasauslässe auf. Der besondere Vorteil der Anordnung in der DE 198 22 874 A1 besteht darin, dass auf die sonst üblichen, getrennten einlassseitigen Rohrleitungen verzichtet werden kann.

Die in der deutschen Offenlegungsschrift DE 198 22 874 A1 beschriebene Integration zweier Turbolader in ein einziges Gehäuse lässt sich jedoch nicht ohne weiteres auf einen zweistufigen Turbolader erweitern. Ursache dafür ist, dass eine Parallelschaltung von Turboladern eine grundsätzlich andere Konstruktion des Gehäuses wie eine Reihenschaltung aufweist. Insbesondere kann beispielsweise bei einer Parallelschaltung auf einfache Weise durch bloßes Zusammenführen der Einlässe und/oder der Auslässe (wie bei der DE 198 22 874 A1) ein Raumgewinn durch Einsparung von Rohrleitungen erzielt werden. Diese Maßnahme lässt sich jedoch nicht ohne weiteres auf eine Reihenbauweise eines Turboladers (zweistufiger Turbolader) erweitern, da hier andere Anforderungen und Randbedingungen gelten. Beispielsweise muss bei einem zweistufigen Turbolader berücksichtigt werden, dass der heiße Abgasstrom beim Durchströmen von der Hochdruckstufe zu der Niederdruckstufe möglichst ohne allzu große Verringerung der Abgastemperatur bzw. der Strömungsgeschwindigkeit erfolgt. Dazu muss aber eine Strömungsrichtung eingehalten werden, dass heißt die Abgasspirale muss eine in bestimmten Bereichen vorgegebene Form aufweisen.

Aus der US 5,528,902 oder der GB 2,069, 593 A, von der die Erfindung ausgeht, sind Abgasturbolader bekannt, bei denen mehrore Turbinenstufen oder inchrere Turboldder zusammen in einem weiteren sie umgebenden gemeinsamen Gehäuse integriert sind.

Der vorliegenden Erfindung liegt nunmehr die Aufgabe zugrunde, einen möglichst platzsparenden zweistufigen Abgasturbolader bereitzustellen.

Erfindungsgemäß wird diese Aufgabe durch ein Aufladesystem mit den Merkmalen des Patentanspruchs 1 gelöst.

Die Erfindung wird ferner gelöst durch eine Brennkraftmaschine, mit den Merkmalen der Anspruchs 12.

Vorteilhafte Ausgestaltungen und Weiterbildungen der Erfindung sind den Unteransprüchen sowie der Beschreibung unter Bezugnahme auf die Zeichnung entnehmbar.

Die Erfindung wird nachfolgend anhand der in den Figuren der Zeichnung angegebenen Ausführungsbeispiele näher erläutert. Es zeigt dabei:
- Figur 1: in einer schematischen Darstellung eine Brennkraftmaschine mit einer erfindungsgemäßen, zweistufigen Aufladung;
- Figur 2: einige Konstruktionsdarstellungen (a) - (d) des Gehäuses eines erfindungsgemäßen zweistufigen Turboladers, bei dem das Gehäuse von verschiedenen Seiten dargestellt ist;
- Figur 3: eine Bilddarstellung des Abgasturboladers entsprechend Figur 2 mit noch nicht angekoppelter bzw. angeflanschter Verbindungsrohrleitung zwischen den Verdichtern.

In allen Figuren der Zeichnung sind gleiche bzw. funktionsgleiche Elemente - sofern nichts anderes angegeben ist - mit gleichen Bezugszeichen versehen worden. In den Figuren wurden ferner die Richtung des Abgasstromes sowie des Ladeluftstromes jeweils durch Pfeile in den entsprechenden Leitungen bezeichnet.

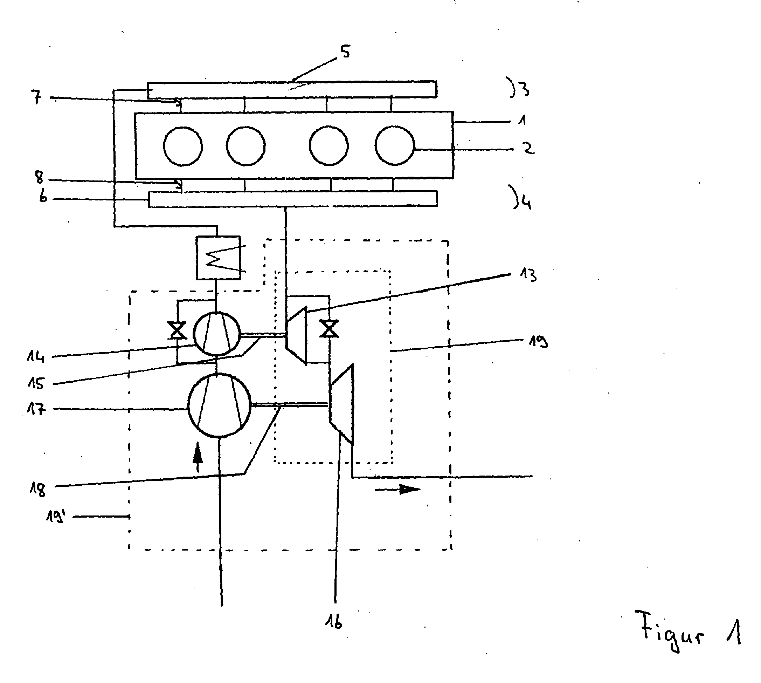

Figur 1 zeigt in einer schematischen Darstellung eine Brennkraftmaschine mit einer erfindungsgemäßen zweistufigen Aufladung.

In Figur 1 ist mit Bezugszeichen 1 eine vierzylindrige Brennkraftmaschine bezeichnet. Die Zylinder 2 der Brennkraftmaschine sind hier in Reihe zueinander angeordnet. Die Brennkraftmaschine 1 weist eine Frischluftseite 3 und eine Abgasseite 4 auf, wobei die Einlässe 7 auf der Frischluftseite 3 mit einer Ladeluftsammelleitung 5 und die Auslässe 8 der Brennkraftmaschine 1 auf der Abgasseite 4 mit Abgassammelleitungen 6 verbunden sind.

In Figur 1 ist ferner mit Bezugszeichen 10 der erfindungsgemäße, zweistufig ausgebildete Abgasturbolader 10 bezeichnet. Ein solcher zweistufiger Turbolader 10 weist eine Hochdruckstufe und eine Niederdruckstufe auf. Die Hochdruckstufe besteht aus einer Hochdruckturbine 13 und einem Hochdruckverdichter 14, die über eine gemeinsame Welle 15 miteinander starr gekoppelt sind. In gleicher Weise weist die Niederdruckstufe miteinander durch eine gemeinsame Welle 18 gekoppelte Niederdruckturbine 16 und Niederdruckverdichter 17 auf. Die Hochdruckstufe ist der Niederdruckstufe abgasseitig vorgeschaltet angeordnet.

Erfindungsgemäß sind die Turbinengehäuse von Hochdruckturbine 13 und Niederdruckturbine 16 in einer gemeinsamen Turbinengehäuseeinheit 19 integriert und damit in sehr kompakter und platzsparender Art und Weise zueinander angeordnet. In Figur 1 ist dieser Gegenstand durch die gepunktete Linie angedeutet, welche das Gehäuse 19 darstellen sollen. Zusätzlich oder alternativ können auch beide Stufen des Abgasturboladers 10 in einem gemeinsamen Gehäuse 19' integriert sein. Dies ist in Figur 1 durch die gestrichelte Linie angedeutet. Die beiden Turbinengehäuse können auch in zwei Gehäuseeinheiten integriert sein, die durch geeignete konstruktive Maßnahmen platzsparend miteinander verbunden sind.

Die mittels des erfindungsgemäßen Aufladesystems durchführbare zweistufige Aufladung ermöglicht durch die Art der konstruktiven Gestaltung der Turbine eine optimierte Regelung der Abgasrückführung und eine Erhöhung der Motorbremsleistung im gesamten Motorbetriebsbereich.

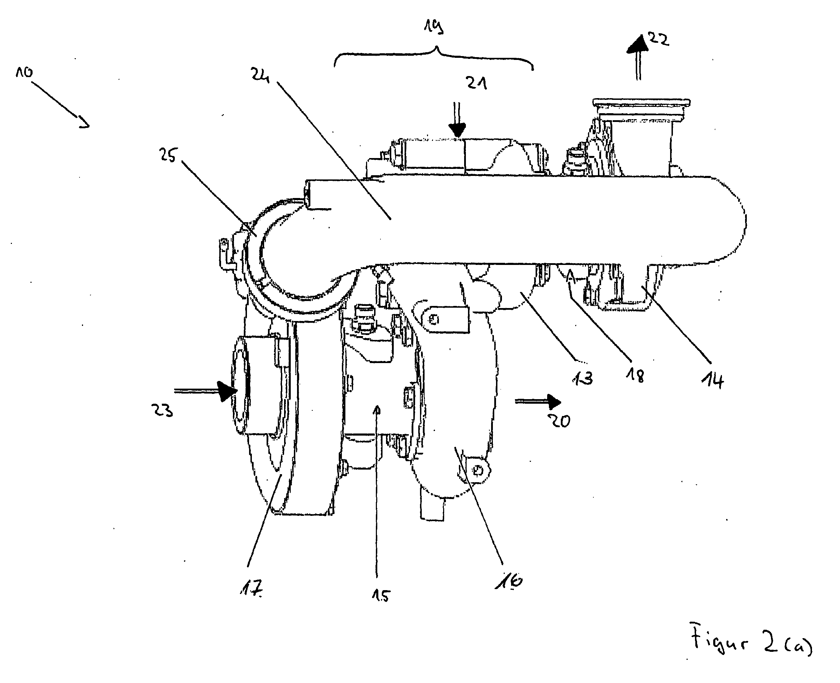

Die Erfindung wird nachfolgend anhand der Konstruktionszeichnungen der Figuren 2a bis 2d näher erläutert.

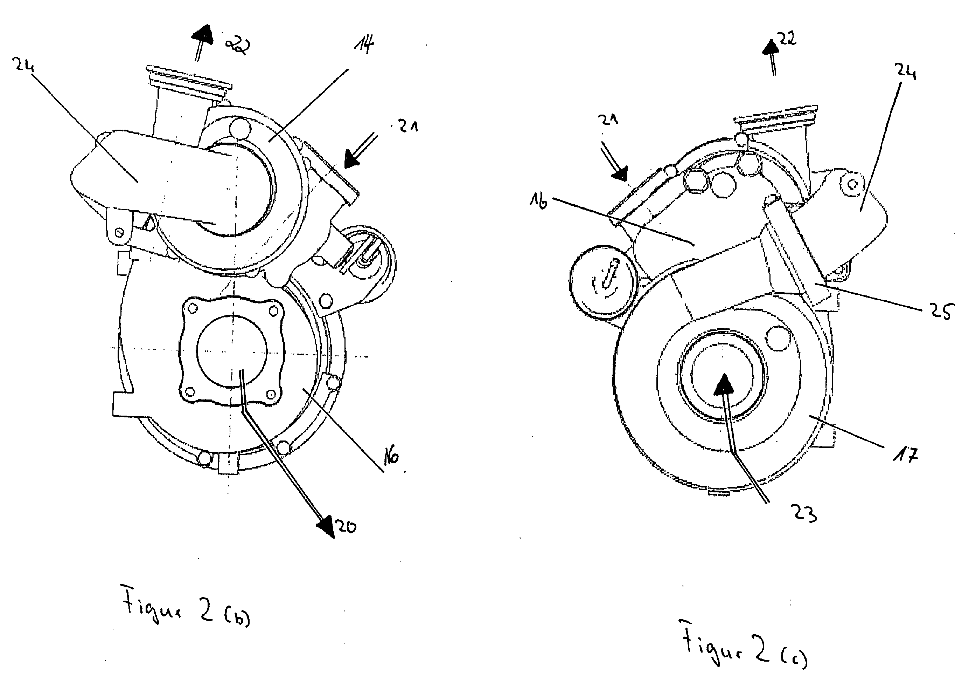

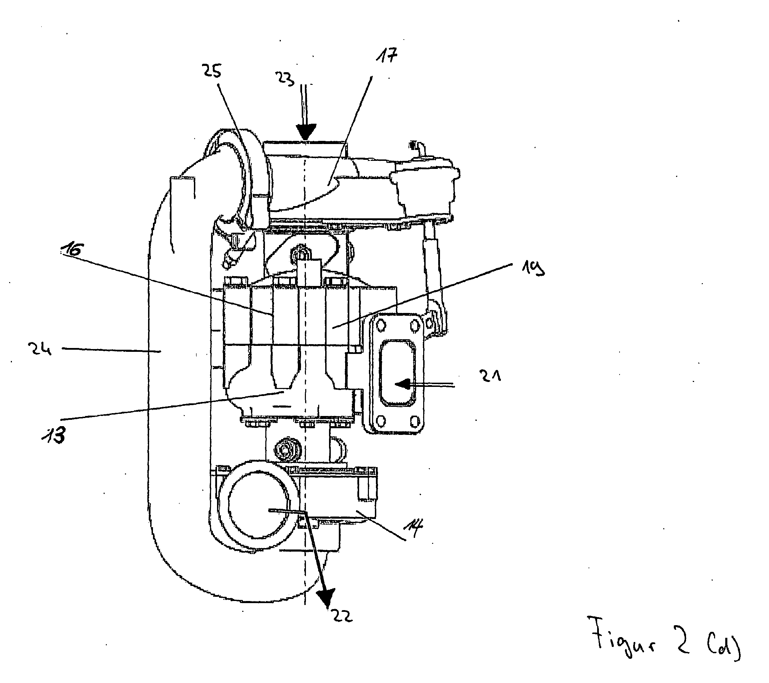

Figur 2a zeigt das gemeinsame Turbinengehäuse 19 der Hochdruckturbine 13 und der Niederdruckturbine 16. Das gemeinsame Gehäuse 19 weist einen Abgaseinlass 21 sowie einen Abgasauslass 20 auf. An den Abgaseinlass 21 ist an eine nicht dargestellte Abgasrohrleitung ankoppelbar, über die die Hochdruckturbine 13 stromaufwärts mit der Abgassammelleitung 6 der Brennkraftmaschine 1 verbindbar ist. Der Abgasauslass 20 ist ebenfalls mit einer Abgasrohrleitung verbindbar, die das durch die beiden Turbinen 13, 16 strömende Abgas einem Auspuff zuleitet. Der besondere Vorteil besteht hier darin, dass der Abgasauslass der Hochdruckturbine 13 direkt mit dem Abgaseinlass der Niederdruckturbine 16 verbunden ist, d.h. es kann hier auf die Verwendung von mehr oder weniger langen Rohrleitungen verzichtet werden, da deren Funktion durch die Konstruktion des gemeinsamen Turbinengehäuses 19 erfüllt ist. Die beiden Turbinen 13, 16 sind somit in der in Figur 2 dargestellten oder einer ähnlichen Weise ineinander verschachtelt angeordnet.

Der Niederdruckverdichter 17 weist einen Frischlufteinlass 23 auf. Über in Figur 2 nicht dargestellte Rohrleitungen, die an den Frischlufteinlass 23 ankoppelbar oder anflanschbar sind, lässt sich so Frischluft der Niederdruckstufe des Abgasturboladers 10 zuführen. Der Hochdruckverdichter 14 weist einen Frischluftauslass 22 auf. An den Frischluftauslass 22 ist ebenfalls eine Rohrleitung ankoppelbar oder anflanschbar, über die Frischluft, welche vom Hochdruckverdichter 14 komprimiert wird, den Frischlufteinlässen 7 der Brennkraftmaschine 1 zugeführt wird.

Der Niederdruckverdichter 17 ist mit dem Hochdruckverdichter 14 über eine Rohrleitung 24 verbunden, die zwischen dem Auslass des Niederdruckverdichters 17 und dem Einlass des Hochdruckverdichters 14 angeflanscht bzw. angekoppelt ist.

Die kompakte Anordnung des gemeinsamen Turbinengehäuses 19 hat vor allem den Vorteil, dass der zweistufige Turbolader 10 damit raumsparender ausgebildet werden kann. Die kompakte Anordnung der beiden Turbinen 13, 16 in einem gemeinsamen Gehäuse 19 hat indes den weiteren technischen Vorteil, dass das Abgas, welches von der Hochdruckturbine 13 zu der Niederdruckturbine 16 strömt, lediglich eine sehr geringe Wegstrecke zurückzulegen hat. Der Verlust an kinetischer Energie, die das Abgas in dem Kanal zwischen Hochdruckturbine 13 und Niederdruckturbine 16 erfährt, ist daher minimal. Darüber hinaus ist auch der Temperaturabfall bedingt durch die kurze Wegstrecke und durch die eng beieinander angeordneten Turbinen 13, 16 ebenfalls minimal. Die Minimierung der thermischen und kinetischen Verluste impliziert gleichermaßen eine höhere Geschwindigkeit der Turbinenräder. Dadurch bedingt haben auch die Verdichterräder eine höhere Umdrehungsgeschwindigkeit, so dass Frischluft stärker verdichtet wird und damit die Motorleistung gesteigert wird.

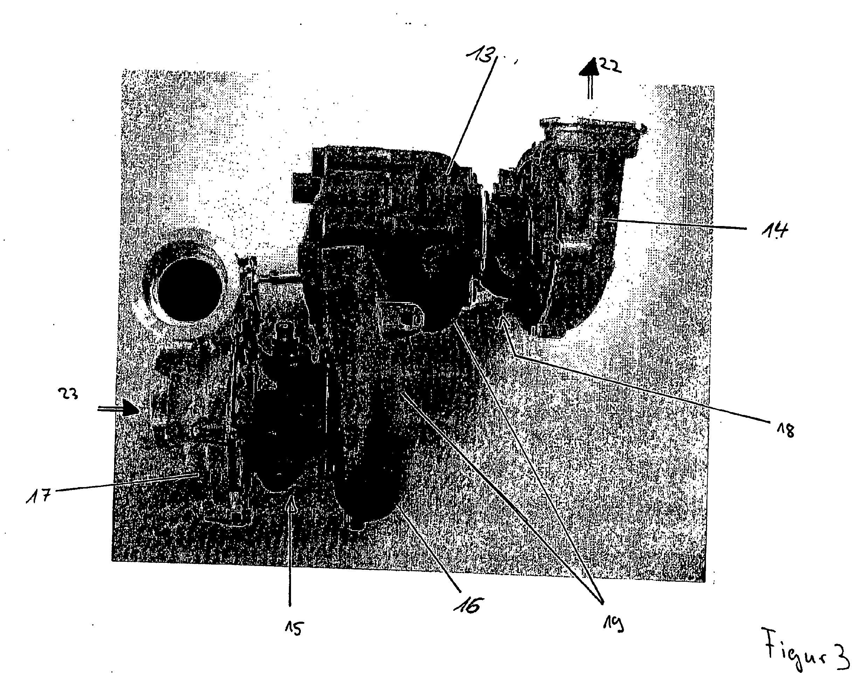

Figur 3 zeigt eine Bilddarstellung des Abgasturboladers entsprechend Figur 2 mit noch nicht angekoppelter bzw. angeflanschter Verbindungsrohrleitung zwischen den Verdichtern. In Figur 3 ist besonders deutlich erkennbar, wie die beiden Turbinen 13, 16 in dem gemeinsamen Gehäuse 19 angeordnet sind. Insbesondere sind die beiden Turbinen 13, 16 gewissermaßen ineinander verschachtelt, so dass dadurch eine weitestgehend kompakte und platzsparende Anordnung dieser Turbinengehäuse gewährleistet ist. Wie ebenfalls in Figur 3 deutlich wird, ist das gemeinsame Turbinengehäuse 19 vorteilhafterweise aus Gusseisen, wobei durch bekannte Herstellungsverfahren die jeweiligen Turbinenschaufeln in das Gehäuse 19 eingebracht werden. Insbesondere zeigt auch Figur 3, dass der Verbindungskanal zwischen der Hochdruckturbine 13 und der Niederdruckturbine 16 außerordentlich kurz ist und lediglich durch die jeweiligen Turbinengeometrien von Hochdruckturbine und Niederdruckturbine bestimmt ist. Im vorliegenden Ausführungsbeispiel weist die Hochdruckturbine 13 einen kleineren Laufraddurchmesser als die Niederdruckturbine 16 auf, wobei das Laufraddurchmesserverhältnis zwischen Niederdruck- und Hochdruckturbine typischerweise, jedoch nicht notwendigerweise, im Bereich 1,2 bis 1,8 liegt. In gleicher Weise weist das Verdichterrad des Hochdruckverdichters 14 einen kleineren Durchmesser als das Verdichterrad des Niederdruckverdichters 17 auf.

Die Hochdruckstufe kann einflutig oder zweiflutig ausgebildet sein. Im Falle einer einflutigen Hochdruckstufe weist das Turbinengehäuse typischerweise lediglich eine Bypassbohrung auf, die gegebenenfalls auch vergrößert sein kann. Im Falle einer zwei- oder mehrflutigen Hochdruckstufe weist das Turbinengehäuse typischerweise zwei gegebenenfalls ebenfalls vergrößerte Bypassbohrungen auf. Vorteilhafterweise wird der Austrittskanal durch Fräsen einer Fläche bearbeitet, die gleichzeitig den Sitz des Klappentellers und die Dichtfläche zur Anflanschung der Niederdruckstufe darstellt. Dieser Variante ist durch eine Verwendung von zwei getrennten Regelklappen und eventuell ungleich großen Spiralquerschnitten der beiden Turbinenkanäle mittels einer Regelung des Abgasdruckes vor der Turbine darstellbar. Dies ermöglicht nicht nur eine differenzierte Aufteilung des Abgasmassenstromes auf Hochdruck- und Niederdruckstufe, sondern auch eine Steuerung der Abgasrückführrate im Falle, dass der Motor mit einer Abgasrückführung ausgestattet ist.

Im Zusammenspiel mit einer geregelten Abgasbremsklappe kann über eine Regelung der Bypassklappe eine Erhöhung der Auspuffbremsleistung über den gesamten Motorbetriebsbereich erzielt werden.

Das Turbinengehäuse der Niederdruckstufe ist typischerweise einflutig ausgestaltet, wenngleich unter Umständen auch ein zweiflutig ausgebildetes Turbinengehäuse der Niederdruckstufe denkbar wäre. Allerdings kann in einer Ausgestaltung der Turbineneintritt der Niederdruckstufe in verlängerter Form ausgebildet sein, so dass der Flansch am Abgaseintritt direkt am Austritt der Hochdruckstufe angeflanscht wird. Der Turbineneintritt überdeckt somit den Turbinenaustritt und die Bypassbohrung der Hochdruckstufe. In dem verlängerten Hals des Turbinengehäuses der Niederdruckstufe kann dann vorteilhafterweise auch eine Lagerung und eine Klappe(n) zur Regelung des Bypassmassenstromes untergebracht sein.

Diese erfindungsgemäße, sehr kompakte Konstruktion einer zweistufig geregelten Aufladung ermöglicht zum einen eine extrem kompakte Bauweise des Turbinengehäuses, die die Anzahl der Dichtflächen reduziert, die eine Möglichkeit der Regelung einer möglicherweise vorhandenen Abgasrückführrate bietet und die eine Erhöhung der Bremsleistung zulässt.

Die Erfindung sei selbstverständlich nicht ausschließlich auf zweistufig ausgebildete Turbolader beschränkt, sondern lässt sich vielmehr auch auf drei oder mehrstufig ausgebildete Turbolader erweitern.

In den vorstehenden Ausführungsbeispielen wurde lediglich ein gemeinsames Turbinengehäuses für Hoch- und Niederdruckturbine dargestellt. Selbstverständlich wäre es auch möglich, zusätzlich oder alternativ die beiden Verdichter in einem einzigen, gemeinsamen Gehäuse anzuordnen. Allerdings ist diese kompakte Anordnung nicht zwingend erforderlich. Zwar weist eine solche kompakte Darstellung einen Raumvorteil auf, jedoch ergeben sich dadurch nicht automatisch auch die oben genannten technischen Vorteile hinsichtlich einer Steigerung der Motorleistung durch eine Verringerung der kinetischen und thermischen Verluste.

Zusammenfassend kann festgestellt werden, dass durch die kompakte Bauweise der Turbinengehäuse bzw. des Turboladergehäuses auf einfache, jedoch nichts desto trotz sehr effektive Weise eine platzsparende Anordnung für einen zweistufigen Turbolader bereitgestellt werden kann, der darüber hinaus eine verbesserte Leistungscharakteristik und überdies eine verbesserte Motorbremscharakteristik als bekannte Turbolader aufweist, ohne dass eine konstruktiv aufwendige und teure Lösung gemäß dem Stand der Technik in Kauf genommen werden muss.

Die vorliegende Erfindung wurde anhand der vorstehenden Beschreibung so dargestellt, um das Prinzip der Erfindung und dessen praktische Anwendung bestmöglichst zu erklären, jedoch lässt sich die Erfindung bei geeigneter Abwandlung selbstverständlich in mannigfaltigen anderen Ausführungsformen realisieren, wie in der beigefügten Ansprüchen beansprucht.

### Bezugszeichenliste

- 1: Brennkraftmaschine
- 2: Zylinder
- 3: Ladeluftseite
- 4: Abgasseite
- 5: Ladeluftsammelleitung
- 6: Abgassammelleitung
- 7: Einlässe
- 8: Auslässe

- 10: Turbolader
- 11: Hochdruckstufe
- 12: Niederdruckstufe
- 13: (Hochdruck-)Turbine
- 14: (Hochdruck-)Verdichter
- 15, 18: Welle
- 16: Niederdruckturbine
- 17: Niederdruckverdichter
- 18: Welle
- 19: gemeinsames Turbinengehäuse
- 19': Gehäuse des Abgasturboladers

- 20: Abgasauslass
- 21: Abgaseinlass
- 22: Frischluftauslass
- 23: Frischlufteinlass
- 24: Verbindungsrohrleitung
- 25: Flansch

## Patentansprüche

1. Aufladesystem für eine Brennkraftmaschine, das zumindest zweistufig ausgebildet ist, wobei eine jeweilige Stufe des Aufladesystems (10) jeweils eine Turbine (13, 16) und jeweils einen Verdichter (14, 17), die über eine gemeinsame Welle (15, 18) miteinander gekoppelt sind, aufweist, wobei zumindest die abgasseitigen Teile (13, 16) des Abgasturboladers (10) in einer gemeinsamen Gehäuseeinheit (19, 19') oder in zwei Gehäuseeinheiten, die platzsparend miteinander verbunden sind, integriert sind, wobei zumindest eine Hochdruckstufe und zumindest eine Niederdruckstufe vorgesehen sind, wobei die Niederdruckstufe abgasseitig der Hochdruckstufe nachgeschaltet und ladeluftseitig vorgeschaltet angeordnet ist, wobei die Hochdruckstufe mindestens eine abgasseitig angeordnete Hochdruckturbine (13) und mindestens einen ladeluftseitig angeordneten Hochdruckverdichter (14), die über eine erste, zwischen diesen angeordnete gemeinsame Welle (15) miteinander gekoppelt sind, enthält, und wobei die Niederdruckstufe mindestens eine abgasseitig angeordnete Niederdruckturbine (16) und mindestens einen ladeluftseitig angeordneten Niederdruckverdichter (17), die über eine zweite, zwischen diesen angeordnete gemeinsame Welle (18) miteinander gekoppelt sind, enthält, wobei ein Abgasauslass der Hochdruckturbine (13) über einen gemeinsamen Kanal innerhalb der gemeinsamen Gehäuseeinheit (19,19') mit dem Einlass der Niederdruckturbine (16) verbunden ist, wobei
der Abgasauslass der Hochdruckturbine (13) ohne Zwischenschaltung einer Rohrleitung mit dem Einlass der Niederdruckturbine (16) verbunden ist, wobei der Kanal zwischen der Hochdruckturbine (13) und der Niederdruckturbine (16) lediglich durch die jeweiligen Turbinengeometrien von Hochdruckturbine (13) und Niederdruckturbine (16) bestimmt ist, **dadurch gekennzeichnet, dass** in der gemeinsamen Gehause einheit (19, 19') mindestens eine Klappe und/oder ein schieber zur Regelung eines By passmassenstroms des Abgases untergebracht ist/sind, und dass das gemeinsame Gehäuse (19, 19') aus zumindest zwei Teilen besteht, wobei ein erster Teil für die erste Turbine (13) und ein zweiter Teil für die zweite Turbine (16) vorgesehen ist und wobei der Auslass der ersten Turbine (13) mit dem Einlass der zweiten Turbine (16) direkt verbunden ist, und
dass die Verbindung zwischen dem ersten Teil und dem zweiten Teil der beiden Turbinen (13, 16) durch einen Flansch gebildet ist.

2. Aufladesystem nach Anspruch 1,
**dadurch gekennzeichnet, dass** zumindest zwei Turbinen (13, 16) in der gemeinsamen Gehäuse einheit (19) integriert sind.

3. Aufladesystem nach einem der vorstehenden Ansprüche,
**dadurch gekennzeichnet, dass** die Hochdruckstufe (11) und die Niederdruckstufe (12) in einer gemeinsamen Gehäuseeiheit (19') integriert sind.

4. Aufladesystem nach einem der vorstehenden Ansprüche,
**dadurch gekennzeichnet, dass** zumindest eine Turbine (13, 16) des Aufladesystems (10) einflutig ausgebildet ist.

5. Aufladesystem nach einem der vorstehenden Ansprüche,
**dadurch gekennzeichnet, dass** zumindest eine Turbine (13, 16), insbesondere die Hochdruckturbine (13), zwei- oder mehrflutig ausgebildet ist.

6. Aufladesystem nach einem der vorstehenden Ansprüche,
**dadurch gekennzeichnet, dass** die gemeinsame Gehäuse einheit (19, 19') aus Gusseisen gefertigt ist.

7. Aufladesystem nach einem der vorstehenden Ansprüche,
**dadurch gekennzeichnet, dass** eine Rohrverbindungsleitung (24) vorgesehen ist, über die der Frischluftauslass des Niederdruckverdichters (17) mit dem Frischlufteinlass des Hochdruckverdichters (14), insbesondere durch einen Flansch (25), verbunden ist.

8. Aufladesystem nach einem der vorstehenden Ansprüche,
**dadurch gekennzeichnet, dass** der Laufraddurchmesser der Hochdruckturbine (13) kleiner ist als der Laufraddurchmesser der Niederdruckturbine (16).

9. Aufladesystem nach einem der verstchenden Ansprüche
**dadurch gekennzeichnet, dass** die Verbindung zwischen den ersten Teil und dem zweiten Teil der beiden Turbinen 13,16) aus einem verlängerten Hals der gemeinsamen Gehäuseeinheit (19, 19') besteht.

10. Aufladesystem nach Anspruch 9,
**dadurch gekennzeichnet, dass**
in dem verlängerten Hals die mindestens eine Klappe und/oder der mindestens eine Schieber zur Regelung eines Bypassmassenstromes des Abgases untergebracht ist.

11. Aufladesystem nach einem der vorstehenden Ansprüche,
**dadurch gekennzeichnet, dass** die beiden Turbinen (13, 16) zueinander kompakt verschachtelt angeordnet sind.

12. Brennkraftmaschine (1),
mit einem Motorblock, der mindestens einen Zylinder (2) aufweist und der mindestens einen Ladelufteinlass (7) und mindestens einen Abgasauslass (8) aufweist,
mit einem Aufladesystem (10) nach einem der vorstehenden Ansprüche, das zumindest zwei Stufen aufweist.

13. Brennkraftmaschine nach Anspruch 12,
**dadurch gekennzeichnet, dass** das Aufladesystem (16) als Turbolader (10) ausgebildet ist.

14. Brennkraftmaschine nach einem der Ansprüche 12 oder 13,
**dadurch gekennzeichnet, dass** die Brennkraftmaschine (1) als Otto-Motor oder als Dieselmotor ausgebildet ist.

## Claims

1. Supercharging system for an internal combustion engine, which supercharging system is of two-stage design, with a respective stage of the supercharging system (10) having in each case one turbine (13, 16) and in each case one compressor (14, 17) which are coupled to one another by means of a common shaft (15, 18), with at least the exhaust-gas-side parts (13, 16) of the exhaust-gas turbocharger (10) being integrated in a common housing unit (19, 19') or in two housing units which are connected to one another in a space-saving manner, with at least one high-pressure stage and at least one low-pressure stage being provided, with the low-pressure stage being connected downstream of the high-pressure stage at the exhaust-gas side and upstream of the high-pressure stage at the charge-air side, with the high-pressure stage comprising at least one high-pressure turbine (13) arranged at the exhaust-gas side and at least one high-pressure compressor (14) arranged at the charge air side, which high-pressure turbine (13) and high-pressure compressor (14) are coupled to one another by means of a first common shaft (15) which is arranged therebetween, and with the low-pressure stage comprising at least one low-pressure turbine (16) arranged at the exhaust-gas side and at least one low-pressure compressor (17) arranged at the charge-air side, which low-pressure turbine (16) and low-pressure compressor (17) are coupled to one another by means of a second common shaft (18) which is arranged therebetween, with an exhaust-gas outlet of the high-pressure turbine (13) being connected to the inlet of the low-pressure turbine (16) via a common duct within the common housing unit (19, 19'), with the exhaust-gas outlet of the high-pressure turbine (13) being connected to the inlet of the low-pressure turbine (16) without the interposition of a tube line, with the duct between the high-pressure turbine (13) and the low-pressure turbine (16) being defined merely by the respective turbine geometries of the high-pressure turbine (13) and low-pressure turbine (16), **characterized in that** at least one flap and/or one slide for regulating a bypass mass flow of the exhaust gas are/is accommodated in the common housing unit (19, 19'), and **in that** the common housing (19, 19') is composed of at least two parts, with a first part being provided for the first turbine (13) and a second part being provided for the second turbine (16) and with the outlet of the first turbine (13) being directly connected to the inlet of the second turbine (16), and **in that** the connection between the first part and the second part of the two turbines (13, 16) is formed by a flange.

2. Supercharging system according to Claim 1,
**characterized in that** at least two turbines (13, 16) are integrated in the common housing unit (19).

3. Supercharging system according to one of the preceding claims,
**characterized in that** the high-pressure stage (11) and the low-pressure stage (12) are integrated in a common housing unit (19').

4. Supercharging system according to one of the preceding claims,
**characterized in that** at least one turbine (13, 16) of the supercharging system (10) is of single-flow design.

5. Supercharging system according to one of the preceding claims,
**characterized in that** at least one turbine (13, 16), in particular the high-pressure turbine (13), is of single-flow or multi-flow design.

6. Supercharging system according to one of the preceding claims,
**characterized in that** the common housing unit (19, 19') is produced from cast iron.

7. Supercharging system according to one of the preceding claims,
**characterized in that** a tube connecting line (24) is provided, by means of which the fresh-air outlet of the low-pressure compressor (17) is connected to the fresh-air inlet of the high-pressure compressor (14), in particular by means of a flange (25).

8. Supercharging system according to one of the preceding claims,
**characterized in that** the rotor diameter of the high-pressure turbine (13) is smaller than the rotor diameter of the low-pressure turbine (16).

9. Supercharging system according to one of the preceding claims,
**characterized in that** the connection between the first part and the second part of the two turbines (13, 16) is composed of an elongated throat of the common housing unit (19, 19').

10. Supercharging system according to Claim 9,
**characterized in that** the at least one flap and/or the at least one slide for regulating a bypass mass flow of the exhaust gas are/is accommodated in the elongated throat.

11. Supercharging system according to one of the preceding claims,
**characterized in that** the two turbines (13, 16) are arranged in a compactly nested fashion relative to one another.

12. Internal combustion engine (1),
having an engine block which has at least one cylinder (2) and which has at least one charge-air inlet (7) and at least one exhaust-gas outlet (8),
having a supercharging system (10) according to one of the preceding claims, which supercharging system (10) has at least two stages.

13. Internal combustion engine according to Claim 12,
**characterized in that** the supercharging system (16) is embodied as a turbocharger (10).

14. Internal combustion engine according to one of Claims 12 or 13,
**characterized in that** the internal combustion engine (1) is embodied as a spark-ignition engine or as a diesel engine.

## Revendications

1. Système de suralimentation pour un moteur à combustion interne réalisé au moins à deux étages, un étage respectif du système de suralimentation (10) comportant respectivement une turbine (13, 16) et respectivement un compresseur (14, 17) couplés entre eux par l'intermédiaire d'un arbre (15, 18) commun, au moins les parties (13, 16) du côté de l'échappement du turbocompresseur d'échappement (10) étant intégrées dans une unité de carter (19, 19') commune ou dans deux unités de carter, reliées entre elles de façon à ergonomique, au moins un étage haute pression et au moins un étage basse pression étant prévus, l'étage basse pression étant connecté en aval du côté de l'échappement de l'étage haute pression et connecté en amont du côté de l'air de suralimentation, l'étage haute pression contenant au moins une turbine haute pression (13) disposée du côté de l'échappement et au moins un compresseur haute pression (14) disposé du côté de l'air de suralimentation et couplés entre eux par l'intermédiaire d'un premier arbre (15) commun disposé entre eux, et l'étage basse pression contenant au moins une turbine basse pression (16) disposée du côté de l'échappement et au moins un compresseur basse pression (17) disposé du côté de l'air de suralimentation qui sont couplés entre eux par l'intermédiaire d'un second arbre (18) commun disposé entre eux, un orifice de sortie de gaz d'échappement de la turbine haute pression (13) étant relié par l'intermédiaire d'un canal commun situé à l'intérieur de l'unité de carter (19, 19') commune à l'orifice d'admission de la turbine basse pression (16), l'orifice de sortie de gaz d'échappement de la turbine haute pression (13) étant relié à l'orifice d'admission de la turbine basse pression (16) sans insertion d'une conduite tubulaire, le canal situé entre la turbine haute pression (13) et la turbine basse pression (16) étant seulement défini par les formes de turbine respectives de la turbine haute pression (13) et de la turbine basse pression (16), **caractérisé en ce que** au moins un clapet et/ou un robinet-vanne sont disposés dans l'unité de carter (19, 19') commune pour régler le débit massique de la dérivation du gaz d'échappement et que le boîtier (19, 19') commun se compose d'au moins deux parties, une première partie étant prévue pour la première turbine (13) et une seconde partie étant prévue pour la seconde turbine (16) ; et l'orifice de sortie de la première turbine (13) étant directement relié à l'orifice d'admission de la seconde turbine (16) ; et
la jonction entre la première partie et la seconde partie des deux turbines (13, 16) étant réalisée par l'intermédiaire d'une bride.

2. Système de suralimentation selon la revendication 1, **caractérisé en ce qu'**au moins deux turbines (13, 16) sont intégrées dans l'unité de carter (19) commune.

3. Système de suralimentation selon l'une quelconque des revendications précédentes, **caractérisé en ce que** l'étage haute pression (11) et l'étage basse pression (12) sont intégrés dans une unité de carter (19') commune.

4. Système de suralimentation selon l'une quelconque des revendications précédentes, **caractérisé en ce qu'**au moins une turbine (13, 16) du système de suralimentation (10) est réalisée de façon à être à simple flux.

5. Système de suralimentation selon l'une quelconque des revendications précédentes, **caractérisé en ce qu'**au moins une turbine (13, 16), notamment la turbine haute pression (13), sont réalisées à double flux ou à plusieurs flux.

6. Système de suralimentation selon l'une quelconque des revendications précédentes, **caractérisé en ce que** l'unité de carter (19, 19') commune est en fonte.

7. Système de suralimentation selon l'une quelconque des revendications précédentes, **caractérisé en ce qu'**une conduite de jonction de tubes (24) est prévue via laquelle l'orifice de sortie d'air frais du compresseur basse pression (17) est relié à l'orifice d'admission d'air frais du compresseur haute pression (14), notamment par l'intermédiaire d'une bride (25).

8. Système de suralimentation selon l'une quelconque des revendications précédentes, **caractérisé en ce que** le diamètre de roue de roulement de la turbine haute pression (13) est inférieur au diamètre de roue de roulement de la turbine basse pression (16).

9. Système de suralimentation selon l'une quelconque des revendications précédentes, **caractérisé en ce que** la jonction entre la première partie et la seconde partie des deux turbines (13, 16) est composée d'un col allongé de l'unité de carter (19, 19') commune.

10. Système de suralimentation selon la revendication 9, **caractérisé en ce que** l'au moins un clapet et/ou l'au moins un robinet-vanne sont disposés dans le col allongé pour régler un débit massique de la dérivation du gaz d'échappement.

11. Système de suralimentation selon l'une quelconque des revendications précédentes, **caractérisé en ce que** les deux turbines (13, 16) sont disposées de façon entrelacée et compacte l'une par rapport à l'autre.

12. Moteur à combustion interne (1), avec un bloc-moteur comportant au moins un cylindre (2) et au moins un orifice d'admission d'air de suralimentation (7) et au moins un orifice de sortie de gaz d'échappement (8), avec un système de suralimentation (10) selon l'une quelconque des revendications précédentes doté d'au moins deux étages.

13. Moteur à combustion interne selon la revendication 12, **caractérisé en ce que** le système de suralimentation (16) prend la forme d'un turbocompresseur (10).

14. Moteur à combustion interne selon l'une quelconque des revendications 12 ou 13, **caractérisé en ce que** le moteur à combustion interne (1) prend la forme d'un moteur à essence ou d'un moteur diesel.
